# EUROPEAN PATENT APPLICATION

(11) **EP 1 250 966 A1**
(43) Date of publication of application: **23.10.2002**
(21) Application number: 02076391.8
(22) Date of filing: 09.04.2002
(51) Int. Cl.: B05B 15/12, B01D 46/18, B01D 46/22, F26B 21/00

(54) **Suction unit and powder coating booth with an automatic bottom filter**

(30) Priority: 09.04.2001 BE 200100242
(71) Applicant: Goemaere, Wilfried, 8200 Brugge - St. Michiels (BE)
(72) Inventor: Goemaere, Wilfried, 8200 Brugge - St. Michiels (BE)
(74) Representative: Ryckeboer, Leo, Ir.

(57) **Abstract**

The invention relates to an apparatus for filtration comprising a device for exchanging air filters in treating rooms (1) for objects (2) wherein suitable grids (4) are provided in the floor (3) of the room that give access to one or more discharge channels (5) under the floor. In those channels suction means (6) are provided for an air circulation stream (7). The apparatus for filtration with replaceable filter material for the purpose of catching particles carried with the air stream, comprises a filter web (8) that is fixed at one of its extremities to a take-up drum (10) for the loaded filter. The web (8) is near its other extremity rotatably mounted and wound up as a roll for a fresh filter stock (11). The filter web can be moved through the filtration section (14) by driving means (13).

## Description

The invention relates to an apparatus for filtration, including a device for exchanging air filters, by treating objects with a forced air circulation in a room or booth, as e.g. in sanding, respectively in spraying booths for the preparation, respectively painting or lacquering of objects. It relates also to a treating room that is equiped with such a filtration apparatus.

It is known to paint objects, e.g. car bodies by means of spray guns in spraying booths after a sanding operation. In de booth where the paint is sprayed by the spray guns on the objects a downward air flow is generally present. It is the purpose of this laminar downward flow around the object to drain the spray rests, which do not settle down on the object, downwards with the air stream through suitable grids in the floor of the room. The forced air flow is mostly generated by a suitable ventilator in a channel downstream of said floor grids.

Such a spraying apparatus is known from the Belgian patent nr 1 009 345 of applicant.
The particles carried with the air stream in this spraying apparatus are catched or entrapped in porous filter webs which are mounted under the floor grids. The purified air under the filters is then removed by suction by a ventilator and is delivered further in the open air. This so-called dry filtration process with this known filtration apparatus has i. a. the important disadvantage that the static or fixed filters are to be exchanged manually from time to time, especially when they are loaded and saturated with spray rests. This manual operation is however cumbersome, it takes a lot of time, and it is also unsafe because of the open channel areas in the floor during the exchange operation. This is an imporant disadvantage, especially with spraying booths that are practically continuously in use. Therefore, for these intensively used spraying booths, people switched over to the application of water curtains which then carried the paint residue particles away. However, this last solution requires an additional water-treatment plant. That's why people want to come back to dry filtration, also for continuously used treating rooms.

The invention avoids now these disadvantages by offering an apparatus for filtration that allows an easier exchange of the air filters in treating rooms of objects for wich in the floor of the room grids have been mounted, that give access to one or more discharge channels under the floor. In these channels suction means are provided to create and maintain an air circulation stream. The apparatus for filtration with the replaceable filter material to catch the particles that are carried away by the air flow is also placed in these channels.

According to the invention, the filter material comprises at least one filter web that is fixed at one of its extremities to a take-up drum that is rotatably mounted around its shaft, and at its other extremity is rotatably mounted and wound up as a roll for a fresh filter stock. Driving means are also provided for delivering and moving the filter web through the filtration section between the stock roll (from which the fresh filter web is delivered or wound off) and the take-up drum for the loaded filter web.

The filtration section can be placed or extend at a certain distance under the floor grids. However the section preferably extends near the underside of the floor grids. In this section, the wound off filter web is preferably supported by a perforated chute or gutter.

The filter web has, preferably, a very high porosity, as e.g. with depth filters, so that a lot of paint residue can be taken up before the pressure drop accross the web in the filtration section becomes too high. An average porosity of 99 tot 99,9 % in the filtration section - and by preference at the same time a filter thickness between 4 and 7 cm - is appropriate. With the application of a depth filter with such a high porosity, a certain strength is desirable for the web at its outlet side in view of an easy wind-off and wind-up operation. The porosity at this outlet side will thus preferably be smaller than at the inlet side. However surface filters (with a higher density than depth filters) can now also be used more easily. They have to be exchanged more often than depth filters, but the use of filter webs that can be rolled up, just enables an easy exchange. The filter cake of paint residue built up on the filter web of surface filters can also be partly scraped off at the take-up drum, just before winding up the loaded filter web.

An embodiment of this apparatus according to the invention and its operation will now be illustrated by way of example and with reference to the accompanying drawings.

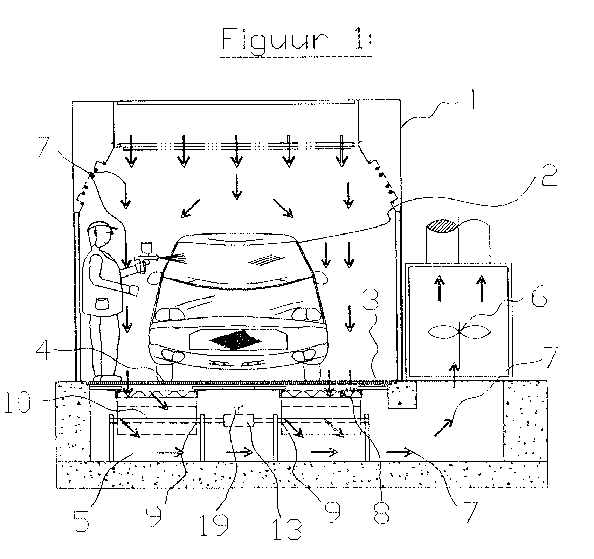

Figure 1 shows a schematic view of a spraying booth.

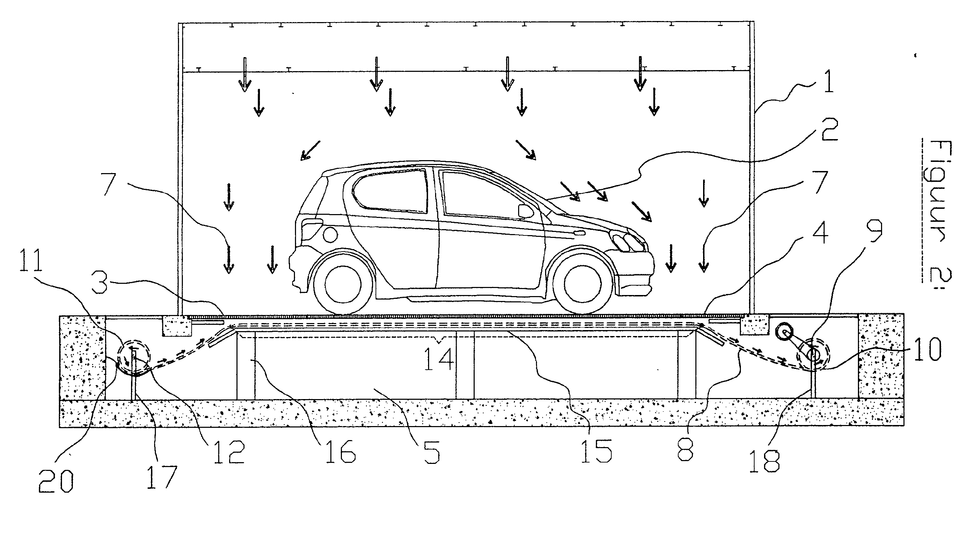

Figure 2 is an view of a longitudinal section of this booth, according to figure 1.

A car 2 is placed upon the floor grids 4 in a spraying - or sanding booth 1 for car bodies. In case of painting or lacquering in a spraying booth or of blowing off abrasive powder or dust in pre-treatment areas with compressed air, one should make sure, because of ergonomic reasons, that the sprayed paint solution or the dust does not return back in a turbulent movement to the operator of the spray gun, respectively the compressed air gun : the air flow 7 should drain the spray rests or residue downwards and away from the operator. The clouds of dust produced in the sanding areas should be drained off similarly.

The air flow 7 loaded with paint rests or dust is removed by suction by means of a ventilator 6 through the floor grids 4 in the channel 5 under the floor. is The filter material just below the floor grids 4 is in the form of a filter web 8. This web is suitably supported by a perforated plate 15 which is mounted on a supporting frame 16 in the channel 5.

A stock 11 of the filter web 8 is wound up as a roll on a rotatable shaft 12 that is carried in bearings in a suitable framework 17 at one of the extremities of channel 5. The fresh filter stock or supply roll 11 (without shaft) can also be put in a concavely shaped support 20. From this stock the filter web 8 proceeds through the filtration section 14 over the chute or gutter 15 under the accompanying floor grid 4 to the take-up drum 10. This drum 10 is mounted on a shaft 9 which is carried in bearings in a frame 18 in channel 5. The take-up drum 10 can be driven by a crank-shaft 19 if desired, and after a certain spraying time, the loaded filter web 8 in the section 14 can be wound up on the roll 10 over the longitudinal distance or length of this section. At the same time a fresh section of filter web 8 is rolled off from the fresh filter stock roll 11 and moved over the chute 15.

The degree of load or blockage of the filter web 8 can be defined by measuring the pressure drop accross the filter web. If the pressure drop increases to the maximum allowed value, a signal can be given in a usual manner to the operator in the spraying booth to replace the filter web in section 14 and thus to wind up the filter for that purpose. This can possibly also be done automatically by linking the signal to the turning on and off of the electric drive 13 operating via a motor reductor combination. With an air velocity through the filter web of 0,7 up to 1,5 m/sec, the pressure drop in the section 14 over a filter web 8 with the said high porosity may increase up to approximately 80 Pa before replacement. At that moment, the paint loaded web has absorbed about 4 kg of paint rests per m².

The exhaust ventilators 6 beyond channel 5 take care of a sufficient suction and ventilation capacity, preferably around the filtration section 14 or around the take-up drums 10 to drain away possible solvent vapours in this environment, as soon and as complete as possible, e.g. to avoid the risk of explosions.

The invention is of course not limited to the above described embodiment, but it also covers mechanically equivalent variants thereof.

## Claims

1. An apparatus for filtration comprising a device for exchanging air filters in treating rooms (1) for objects (2) wherein suitable grids (4) are provided in the floor (3) of the room that give access tot one or more channels (5) under the floor, whereby in those channels suction means (6) are provided for an air circulation stream (7) and wherein, for the purpose of catching particles carried with the air stream, a filter material is placed in these channels between said grids (4) and the suction means, **characterised in that** the filter material comprises at least one filter web (8) that is fixed at one of its extremities to a take-up drum (10) for the loaded filter, which drum is rotatably mounted around its shaft (9), and at its other extremity is rotatably mounted and wound up as a roll for a fresh filter stock (11), and that driving means (13) are provided for delivering and moving the filter web through the filtration section (14) between the stock roll and the take-up drum.

2. An apparatus according to claim 1 in which the filtration section (14) extends near the underside of the floor grids (4).

3. An apparatus according to claim 1 or 2 in which the wound off filter web in the filtration section (14) is supported by a perforated chute (15).

4. An apparatus according to one or another of the preceding claims in which the wound off filter web in the filtration section comprises a non-woven fibre web with an average porosity between 99 % and 99,9 %.

5. An apparatus according to claim 4 in which the filter web has a thickness between 4 and 7 cm.

6. An apparatus according to one or another of the preceding claims in which the filter web is a depth filter.

7. An apparatus according to claim 6 in which the porosity near the filter outlet side of the filter web is smaller than near the filter inlet side.

8. An apparatus according to one or another of the claims 1 to 3 in which the filter web is a surface filter.

9. A treatment room (1) for objects (2) equipped with an apparatus for filtration according to one or another of the preceding claims.
